# EUROPEAN PATENT APPLICATION

(11) **EP 4 722 802 A1**
(43) Date of publication of application: **08.04.2026**
(21) Application number: 24811444.9
(22) Date of filing: 24.05.2024
(51) Int. Cl.: G03B 17/08, G03B 30/00, H04N 23/51, H04N 23/55, H04N 23/57, B23K 26/21, B60R 11/04, H04N 7/18, B23K 101/36

(54) **CAMERA MODULE**

(30) Priority: 24.05.2023 KR 20230067262
(71) Applicant: LG INNOTEK CO. LTD, Gangseo-gu Seoul 07796 (KR)
(72) Inventor: YOON, Kyeong Mok, Seoul 07796 (KR); WOO, Gyung Mok, Seoul 07796 (KR); PARK, Jong Hyun, Seoul 07796 (KR)
(74) Representative: DREISS Patentanwälte PartG mbB
(86) International application number: PCT/KR2024/007110
(87) International publication number: WO 2024/242506

(57) **Abstract**

This camera module comprises: a lens module; a front body that couples to the lens module and includes an upper plate and a first side plate extending downward from the edge of the upper plate; a rear body that is coupled to the front body and includes a lower plate, facing the upper plate in the optical axis direction, and a second side plate extending upward from the edge of the lower plate; a substrate disposed in the space formed by the coupling of the front body and the rear body; and a coupling part disposed between the outer surface of the rear body and the inner surface of the front body.

## Description

### [Technical Field]

The teachings in accordance with exemplary and non-limiting embodiments of the present invention relate generally to a camera module.

### [Background Arts]

Recently, ultra-compact camera modules have been developed and are widely used in small electronic devices such as smartphones, laptops, and gaming consoles.

With the widespread adoption of automobiles, miniature cameras are now extensively employed not only in small electronic devices but also in vehicles. For instance, vehicles are equipped with black box cameras for protection or to provide objective evidence in the event of a traffic accident; rear-view cameras enabling drivers to monitor blind spots at the rear of the vehicle via a screen, thereby ensuring safety when reversing; and perimeter detection cameras capable of monitoring the vehicle's surroundings.

The camera may comprise a lens, a lens module housing the lens, an image sensor converting an image of a subject gathered by the lens into an electrical signal, and a printed circuit board on which the image sensor is mounted. A housing forming the exterior of the camera is constructed with a fully sealed structure to prevent contamination of the internal components by foreign substances, including moisture.

### [Summary of the Invention]

### [Technical Subject]

The present embodiment provides a camera module that facilitates easy coupling between multiple housings and prevents heat transfer into the housing's internal space during the assembly process.

### [Technical Solution]

A camera module according to an exemplary embodiment of the present invention may comprise: a lens module; a front body that couples to the lens module and includes an upper plate and a first side plate extending downward from the edge of the upper plate; a rear body that is coupled to the front body and includes a lower plate facing the upper plate in the optical axis direction, and a second side plate extending upward from the edge of the lower plate; a substrate disposed in the space formed by the coupling of the front body and the rear body; and a coupling part disposed between the outer surface of the rear body and the inner surface of the front body.

Preferably but not necessarily, an inner surface of the first side plate may be disposed to wrap around an outer surface of the second side plate, and the coupling part may be disposed between the inner surface of the first side plate and the outer surface of the second side plate.

Preferably but not necessarily, a lower surface of the first side plate and a lower surface of the lower plate may form a common plane.

Preferably but not necessarily, a first gap may be formed between an inner surface of the first side plate and an outer surface of the second side plate, wherein at least a portion thereof is spaced apart in a direction perpendicular to the optical axis.

Preferably but not necessarily, a first chamfered surface may be formed in the corner region connecting the lower surface of the first side plate and the inner surface of the first side plate, a second chamfered surface may be formed in the corner region connecting the lower surface of the rear body and the side surface of the rear body, and the coupling part may be disposed between the first chamfered surface and the second chamfered surface.

Preferably but not necessarily, a first groove, which is more concave than the other region, may be formed on the outer surface of the first side plate, and at least a portion of the first groove may overlap with the substrate or the second side plate in a direction perpendicular to the optical axis.

Preferably but not necessarily, a second groove, which is more concave than the other region, may be formed on the outer surface of the second side plate, and the second groove may be disposed on the upper side of the coupling part.

Preferably but not necessarily, the side of the substrate and the inner surface of the first side plate may be spaced apart in a direction perpendicular to the optical axis.

Preferably but not necessarily, the front body may protrude downward from the lower surface of the upper plate and may include a first guide whose lower surface supports the upper surface of the substrate.

Preferably but not necessarily, the lower surface of the substrate may contact the upper surface of the second side plate.

### [Advantageous Effects]

Through this embodiment, the front body and rear body are coupled by welding, thereby eliminating the need for components such as screws for fastening between the front and rear bodies or sealing members for waterproofing. This offers the advantage of reducing manufacturing costs and simplifying the process by eliminating the screw coupling process.

Furthermore, it offers the advantage of preventing heat generated during the coupling process from being transferred to the substrate through the grooves in the front and rear bodies.

### [Brief Descriptions of Drawings]

FIG. 1 is a perspective view showing the exterior of the camera module according to an exemplary embodiment of the present invention.
FIG. 2 is a perspective view showing the lower surface of the camera module according to an exemplary embodiment of the present invention.
FIG. 3 is an exploded perspective view of the camera module according to an exemplary embodiment of the present invention.
FIG. 4 is a view of FIG. 3 from a different angle.
FIG. 5 is a cross-sectional view of the camera module according to an exemplary embodiment of the present invention.
FIG. 6 is an enlarged view of A in FIG. 5.
FIG. 7 is a view showing the surface of the coupling part according to an exemplary embodiment of the present invention.
FIG. 8 is a plan view showing the coupling structure of the front body and rear body via the coupling part according to an exemplary embodiment of the present invention.
FIG. 9 is a view illustrating a variant example of the camera module according to an exemplary embodiment of the present invention.
FIG. 10 is a table showing the substrate temperature measured during the welding process according to the presence or absence of the first groove and second groove in an exemplary embodiment of the present invention.
FIG. 11 is a perspective view of a vehicle according to an exemplary embodiment of the present invention.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

Furthermore, the terms used in the embodiments of the present invention are intended to explain the embodiments and are not intended to limit the invention. In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention. Such terms are intended only to distinguish the component from other components and are not limited by the nature, order, or sequence of the component.

And, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or arranged 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

The 'optical axis direction' used below is defined as the optical axis direction of the lens. Meanwhile, the 'optical axis direction' can be correlated with the 'vertical direction,' 'x-axis direction,' etc.

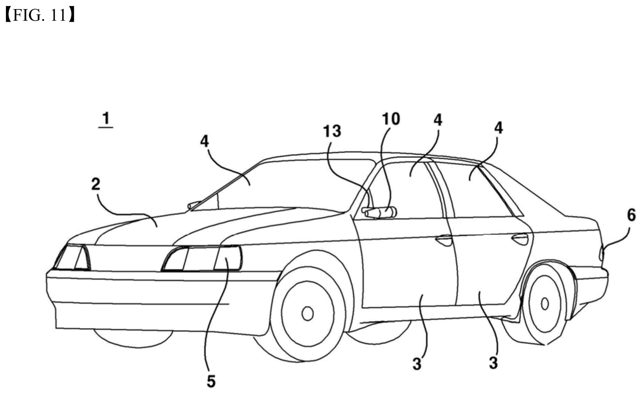

FIG. 11 is a perspective view of a vehicle according to an exemplary embodiment of the present invention.

Referring to FIG. 11, a vehicle (1) according to an exemplary embodiment of the present invention may include a body (2), a door (3), glass (4), headlamps (5), tail lamps (6), and a camera module (10).

The body (2) may constitute the exterior component of the vehicle (1). The body (2) may adopt various forms, such as a frame type or a monocoque type. One or more of the doors (3) may be coupled to the side of the body (2). Furthermore, the glass (4) may be coupled to the front and rear upper portions (where pillars are formed) of the body (2) and to the door (3). The headlamp (5) may be mounted on the front lower portion of the body (2). The rear portion of the lower part of the body (2) may have the tail lamp (6) mounted thereon.

A camera module (10) may be installed on the side of the body (2) or on one or more of the doors (3), specifically the door disposed at the front. The camera module (10) may be installed in front of the glass (4) coupled to the door (3). That is, in the vehicle (1) of this embodiment, the side mirror may be replaced by the camera module (10).

The camera module (10) is capable of capturing images of the rear areas on both sides of the vehicle. The images captured by the camera module (10) may be electrically connected to a display part (not shown) via an Electronic Control Unit (ECU) or similar. Consequently, the images captured by the camera module (10) may be controlled by the ECU and reproduced on the display part.

An interior space for a driver may be formed within the body (2). A display part may be installed within the body (2). The display part may output the images captured by the camera module (10). The display part may be installed on a dashboard (not shown) within the body (2).

The installation configuration of the camera module (10) within the vehicle (1) described above is exemplary; the camera module (10) may be used for one or more of the vehicle's (1) front camera, side camera, rear camera, and black box.

Hereinafter, the camera module according to the present exemplary embodiment will be described with reference to the drawings.

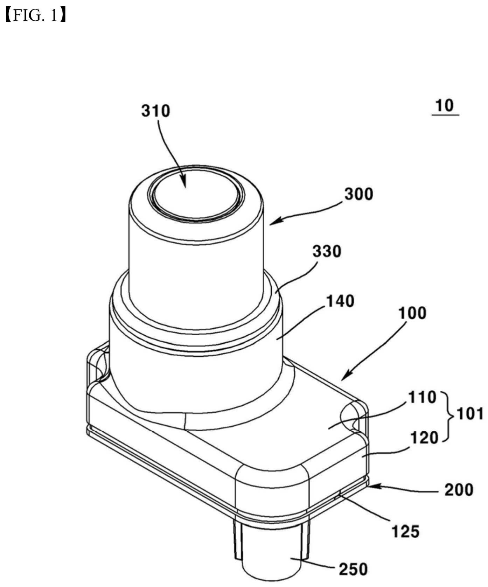

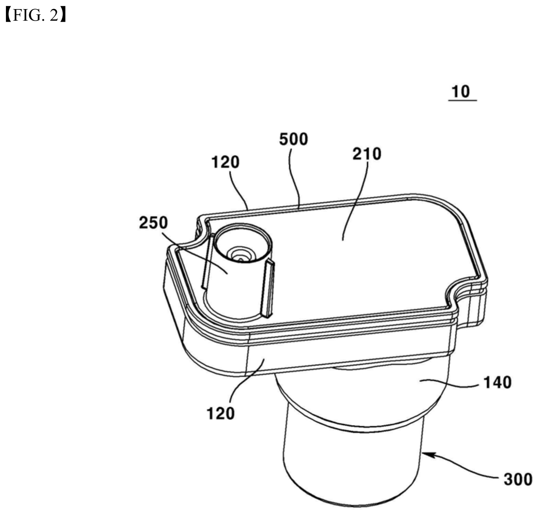

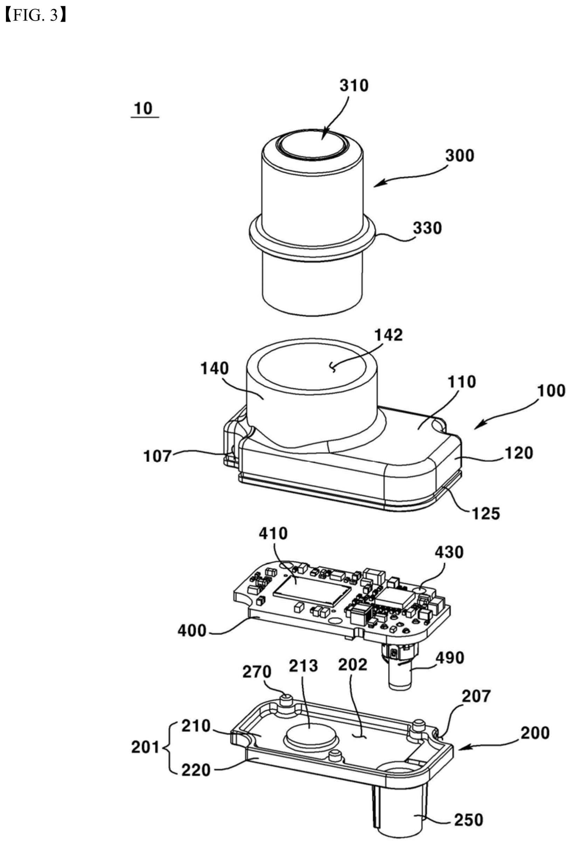

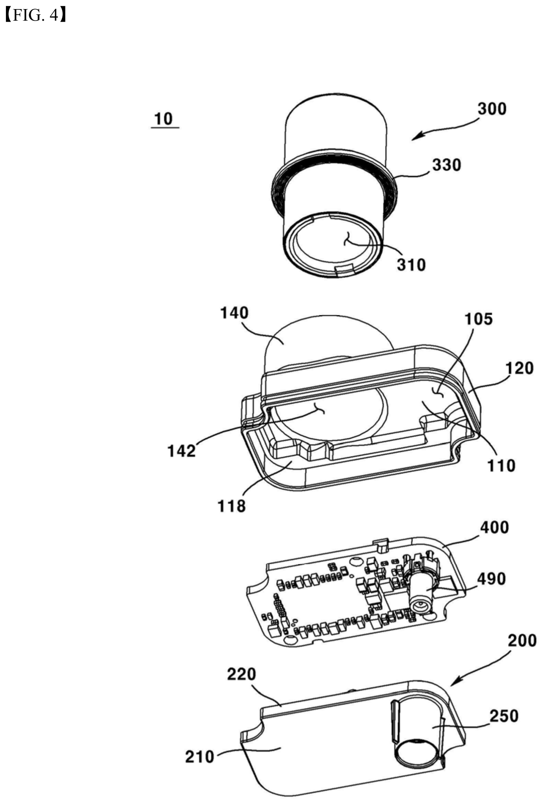

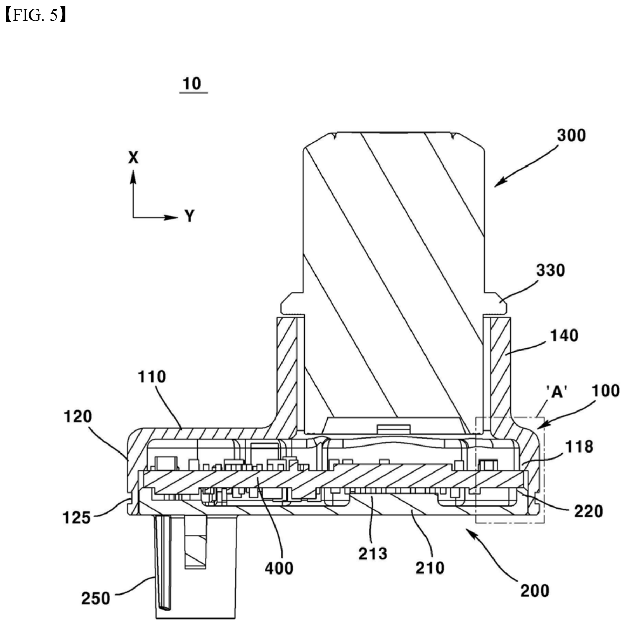

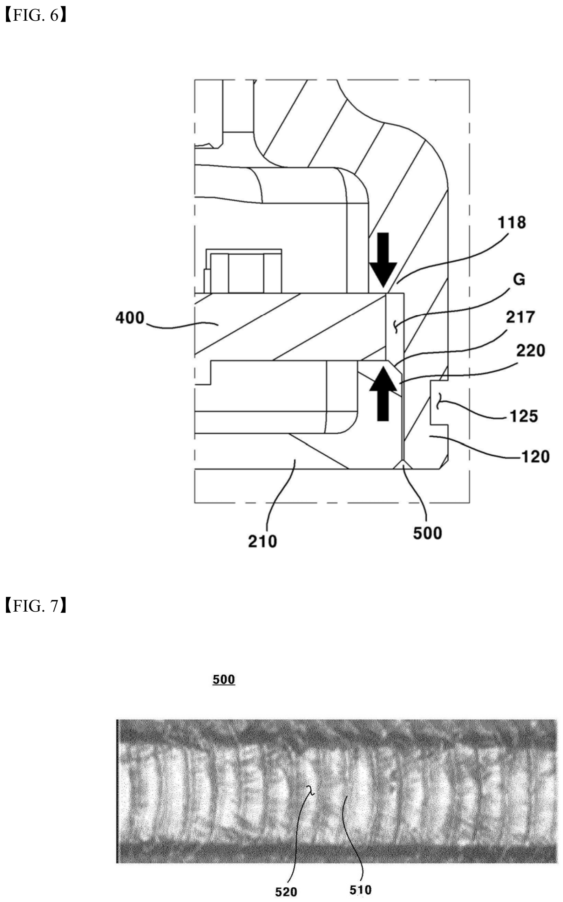

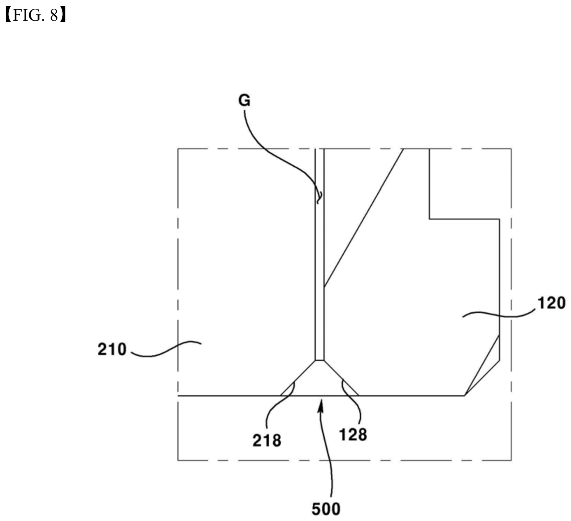

FIG. 1 is a perspective view showing the exterior of the camera module according to an exemplary embodiment of the present invention, FIG. 2 is a perspective view showing the lower surface of the camera module according to an exemplary embodiment of the present invention, FIG. 3 is an exploded perspective view of the camera module according to an exemplary embodiment of the present invention, FIG. 4 is a view of FIG. 3 from a different angle, FIG. 5 is a cross-sectional view of the camera module according to an exemplary embodiment of the present invention, FIG. 6 is an enlarged view of A in FIG. 5, FIG. 7 is a view showing the surface of the coupling part according to an exemplary embodiment of the present invention, and FIG. 8 is a plan view showing the coupling structure of the front body and rear body via the coupling part according to an exemplary embodiment of the present invention.

Referring to FIGS. 1 to 8, the camera module (10) according to an exemplary embodiment of the present invention may comprise a front body (100), a rear body (200), a lens module (300), a substrate (400), and a coupling part (500).

The front body (100) may form the external shape of the camera module (10) through its coupling with the rear body (200). The front body (100) may be named the first body. The front body (100) may be named the front housing. Based on the direction of light incidence, the front body (100) may be disposed forward of the rear body (200). The front body (100) may include a first body (101, see FIG. 1).

The first body (101) may include an upper plate (110) forming the upper surface of the front body (100), and a first side plate (120) extending downward from the edge of the upper plate (110) to form the side of the front body (100). The first body (101) may have a rectangular cross-sectional shape. An internal space (105, see FIG. 4) may be formed within the first body (101), partitioned from other areas by the lower surface of the upper plate (110) and the inner surface of the first side plate (120).

Upon coupling the front body (100) and the rear body (200), the lower surface of the first side panel (120) may be disposed to form the same plane as the lower surface of the lower plate (210) of the rear body (200), described later.

A barrel part (140) may be formed on the first body (101), protruding upward relative to other areas, with the lens module (300) coupled to its inner side. The barrel part (140) may have a circular cross-section. A hollow hole (internal cavity, 142) may be formed within the barrel part (140) to accommodate at least a portion of the lens module (300). The hollow hole (142) may communicate with the inner space (105) of the first body (101).

A groove (107, see FIG. 3) may be formed in the area forming a corner of a side of the front body (100), having a shape recessed more inwardly than other areas. The groove (107) may be provided in plural numbers, each disposed at one corner of the front body (100) and at another corner opposite the said one corner.

The front body (100) may include a first guide (118). The first guide (118) may be formed in a shape projecting downward from the lower surface of the upper plate (110). The first guide (118) may have a shape projecting inwardly from the inner surface of the first side plate (120). The first guide (118) may support the upper surface of the substrate (400). The lower surface of the first guide (118) may contact the upper surface of the substrate (400). Accordingly, the ingress of external foreign matter through the lower surface of the first guide (118) and the upper surface of the substrate (400) can be prevented. The first guide (118) may be disposed along the periphery of the inner space (105) of the front body (100).

The front body (100) may be formed from a metallic material. For example, the material of the front body (100) may be aluminum (Al). The front body (100) may be formed by a forging process.

A first groove (125) may be formed on the side of the front body (100). The first groove (125) may be disposed on the outer surface of the first side plate (120). The first groove (125) may be formed concave inwardly relative to other areas on the outer surface of the first side plate (120). The first groove (125) may be formed to have a closed-loop shape along the periphery of the front body (100). With respect to a direction (Y) perpendicular to the optical axis direction (X) of the lens module (300), the first groove (125) may be disposed to overlap with the second side plate (220) of the rear body (200) described below. The first groove (125) may be disposed to overlap with the substrate (400) in a direction (Y) perpendicular to the optical axis direction (X). The thickness of the area forming the first groove (125) in the first side plate (120) may be smaller than the thickness of other areas.

The rear body (200) may form the external shape of the camera module (10) through its connection with the front body (100). The rear body (200) may be named the second body. The rear body (200) may be named the rear housing. With respect to the direction of light incidence, the rear body (200) may be disposed behind the front body (100). The rear body (200) may include a second body (201, see FIG. 3).

The second body (201) may include a lower plate (210) forming the lower surface of the rear body (200), and a second side plate (220) extending upwardly from the edge of the lower plate (210) to form the side of the rear body (200). The second body (201) may have a rectangular cross-sectional shape corresponding to the cross-sectional shape of the first body (101). An inner space (202) may be formed within the second body (201), partitioned from other areas by the upper surface of the lower plate (210) and the inner surface of the second side plate (220). The inner space (202) of the rear body (200) may, together with the inner space (105) of the front body (100), form the inner space of the camera module (10).

Upon coupling the front body (100) and the rear body (200), the second side plate (220) may be disposed on the inner side of the first side plate (110). The first side plate (110) may be disposed to enclose the outer surface of the second side plate (220). In this case, the outer surface of the second side plate (220) and the inner surface of the first side plate (110) may be mutually coupled via a coupling part (500) described later, while the remaining portions may be spaced apart relative to each other based on a direction (Y) perpendicular to the optical axis direction (X). A gap (G, see FIG. 8) may be formed between at least a portion of the outer surface of the second side plate (220) and at least a portion of the inner surface of the first side plate (120). A gap (G) may be disposed above the coupling part (500).

Upon coupling the front body (100) and the rear body (200), the lower surface of the lower plate (210) and the lower surface of the first side plate (120) may form a common plane.

For the purpose of facilitating the connection between the front body (100) and the rear body (200), as illustrated in FIG. 6, an inclined surface (slope, 217) may be formed on the upper outer surface of the second side plate (220). The inclined surface (217) may be formed such that the thickness of the second side plate (220) decreases downwards.

A groove (207, see FIG. 3) may be formed in the area forming a corner on one side of the rear body (200), which is recessed inwards relative to other areas. The groove (207) may be provided in plurality, being arranged respectively at one corner of the rear body (200) and at another corner opposite the said one corner. The groove (207) of the rear body (200) may be disposed to face the groove (107) of the front body (100) in the optical axis direction.

A connector extraction part (250), having a shape projecting downward relative to other areas, may be disposed at the lower portion of the rear body (200). The connector extraction part (250) may have a shape projecting downward from the lower surface of the lower plate (210). A space may be formed on the inner side of the connector extraction part (250) for accommodating a connector (490) described below. An external terminal may be coupled to the connector extraction part (250). Consequently, through the coupling of the external terminal and the connector (490), power may be supplied to the camera module (10), or electrical signals related to operation may be transmitted and received.

The upper surface of the lower plate (210) may be provided with a protrusion (213) having a shape that projects upwards relative to other areas. The protrusion (213) may be disposed to face an image sensor (410) of the substrate (400), described later, along the optical axis direction. The protrusion (213) may have a circular cross-sectional shape. The upper surface of the protrusion (213) may be spaced apart from the lower surface of the substrate (400) in the optical axis direction. Alternatively, the upper surface of the protrusion (213) may be in contact with the lower surface of the substrate (400). The substrate (400) may be supported via the protrusion (213), and heat generated from the substrate (400) may be readily dissipated to the exterior.

A protrusion (270) may be formed on the upper surface of the rear body (200). The protrusion (270) may have a shape projecting upwards from the upper surface of the second side plate (220) relative to other areas. The protrusion (270) may be provided in plurality and disposed spaced apart from one another along the periphery of the rear body (200). The protrusion (270) may have a circular cross-sectional shape. The protrusion (270) may be coupled with a coupling hole (430) of the substrate (400) described below.

The rear body (200) may be formed from a metallic material. For example, the material of the rear body (200) may be aluminum (Al). The rear body (200) may be formed by a forging process.

The lens module (300) may be coupled to the front body (100). The lens module (300) may be disposed such that at least a portion thereof is coupled to the barrel part (140) of the front body (100), and another portion protrudes above the barrel part (140). The lens module (300) may comprise a barrel and one or more lenses (310) accommodated within the barrel. The lens (310) may be disposed to face the image sensor (410) of the substrate (400) along the optical axis direction. The lens (310) may be optically aligned with the image sensor (410). The lens (310) may be provided in plurality and disposed spaced apart along the optical axis direction.

A flange (330) may be formed on the outer surface of the lens module (300), having a shape that protrudes further outwards than other regions. The cross-sectional area of the region where the flange (330) is formed may be larger than that of other regions. Upon coupling the lens module (300) to the front body (100), the flange (330) may be disposed on the barrel part (140). A sealing member (not shown) may be disposed between the flange (330) and the barrel part (140), thereby preventing external contaminants from entering the space within the camera module (10).

The substrate (400) may be disposed within the space of the camera module (10). The substrate (400) may be disposed between the front body (100) and the rear body (200). As illustrated in FIG. 6, the upper surface of the substrate (400) may be supported by the lower surface of the first guide (118) of the front body (100). The lower surface of the substrate (400) may be supported by the upper surface of the second side plate (220). The lower surface of the substrate (400) may contact the upper surface of the second side plate (220). Consequently, the coupled state of the substrate (400) between the front body (100) and the rear body (200) may be maintained securely.

The substrate (400) may be a printed circuit board (PCB). The substrate (400) may be formed in a plate shape having a predetermined thickness based on the optical axis direction (X).

One or more electronic components for driving the camera module (10) may be disposed on the surface of the substrate (400). For example, an image sensor (410) may be disposed on the upper surface of the substrate (400), and the image sensor (410) may be disposed facing the lens (310) along the optical axis direction. A connector (490) may be mounted on the lower surface of the substrate (400), and external terminals may be electrically connected via the connector (490).

A coupling hole (430) may be formed in the region of the substrate (400) facing the protrusion (270) of the rear body (200) in the optical axis direction, with a shape penetrating from the upper surface to the lower surface. During coupling of the substrate (400) and the rear body (200), the protrusion (270) may engage with a coupling hole (430). Consequently, the coupled state of the substrate (400) may be maintained securely.

Meanwhile, the protrusions (270) and the coupling holes (430) are disposed in pairs on one edge of the rear body (200) and the substrate (400), and one is disposed on the opposite side of the rear body (200) and the substrate (400) relative to the said one side, thereby guiding the coupling direction during the assembly process.

As illustrated in FIG. 6, a gap (G) may also be formed between the side of the substrate (400) and the inner surface of the first side plate (120). Through the gap (G), the side of the substrate (400) and the inner surface of the first side plate (120) may be spaced apart in a direction perpendicular to the optical axis direction. In this case, the length of the gap (G) between the side of the substrate (400) and the inner surface of the first side plate (120) may be greater than the size of the gap (G) between the outer surface of the second side plate (220) and the inner surface of the first side plate (120). For distinction, the gap (G) between the outer surface of the second side plate (220) and the inner surface of the first side plate (120) may be termed a first gap, and the gap (G) between the side of the substrate (400) and the inner surface of the first side plate (120) may be termed a second gap. In this case, the second gap may be disposed above the first gap. The first gap may be 15% or less of the thickness of the first side plate (120) or the thickness of the second side plate (220).

The following describes a coupled structure between the front body (100) and the rear body (200).

The camera module (10) according to an exemplary embodiment of the present invention may have the front body (100) and the rear body (200) coupled by welding. For example, the front body (100) and the rear body (200) may be coupled by a laser welding method. As illustrated in FIGS. 2, 6, and 8, the front body (100) and rear body (200) may be mutually coupled by welding between the lower surface of the first side plate (120), disposed facing in a direction perpendicular to the optical axis, and the lower surface of the bottom plate (210). Consequently, components such as screws for fastening the front body (100) and rear body (200) together, or sealing members for waterproofing, can be omitted. This offers the advantage of reducing manufacturing costs and improving production efficiency.

In detail, a coupling part (500) may be formed between the front body (100) and the rear body (200). The coupling part (500) may be an area formed by welding between the front body (100) and the rear body (200). The coupling part (500) may be formed between the inner surface of the first side plate (120) and the side surface of the rear body (200). The coupling part (500) may be formed between the inner surface of the first side plate (120) and the outer surface of the second side plate (220). The coupling part (500) may be formed between the lower surface of the first side plate (120) and the lower surface of the lower plate (210). The coupling part (500) may have a closed-loop cross-section.

The lower surface of the coupling part (500) may form the same plane as the lower surface of the first side plate (120) and the lower surface of the lower plate (210).

The surface of the coupling part (500) may have a wobble shape. Accordingly, as illustrated in FIG. 7, the surface of the coupling part (500) may comprise a plurality of protruding portions (510), which project more than other areas, and a plurality of recessed portions (520), which are concave relative to the surface of the protruding portions (510), disposed in an alternating pattern.

Meanwhile, for convenience in the assembly process, as shown in FIG. 8, chamfered surfaces (128, 218) may be formed on the side of the rear body (200) corresponding to the forming region of the coupling part (500) and on the inner surface of the first side plate (120), respectively. The chamfered surfaces (128, 218) may comprise a first chamfered surface (128) formed in the corner region connecting the lower surface of the first side plate (120) and the inner surface of the first side plate (120), a second chamfered surface (218) formed in the corner region connecting the lower surface of the rear body (200) and the side surface of the rear body (200). The coupling part (500) may be formed between the first chamfered surface (128) and the second chamfered surface (218). The area formed between the first chamfered surface (128) and the second chamfered surface (218) may have a shape where the cross-sectional area decreases upwardly.

For ease of welding, the corresponding surfaces of the front body (100) and rear body (200) in the region where the coupling part (500) is formed may be surface-treated, such as by etching.

Meanwhile, as described above, the first groove (125) may be formed on the side of the front body (100). The heat generated during the welding process of the front body (100) and the rear body (200) can be reduced from being transmitted to the substrate (400) through the first groove (125). This is achieved by reducing the thickness of a portion of the first side plate (120) corresponding to the area where the first groove (125) is formed, thereby shortening the path along which heat generated in the welding area can travel.

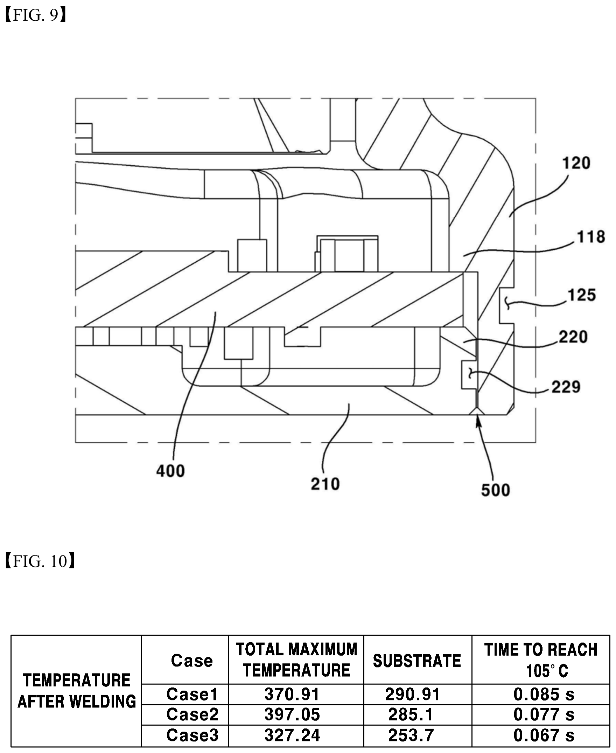

FIG. 9 is a diagram illustrating a variant example of a camera module according to an embodiment of the present invention.

Referring to FIG. 9, a first groove (125) may be formed on the outer surface of the first side plate (120). In this case, the first groove (125) may be disposed relatively higher than in the aforementioned embodiment. Specifically, the first groove (125) may be disposed to overlap with the substrate (400) in a direction perpendicular to the optical axis.

The variant example is characterized in that a second groove (229) is formed on the outer surface of the second side plate (220). The second groove (229) may have a concave shape on the outer surface of the second side plate (220), being recessed inwardly relative to other areas. The second groove (229) may be disposed to overlap the first side plate (120) in a direction (Y) perpendicular to the optical axis direction (X). The length of the second groove (229) in the optical axis direction (X) may be smaller than the length of the first groove (125) in the optical axis direction (X).

The formation region of the second groove (229) in the second side plate (220) may have a smaller thickness than other regions. Consequently, similar to the first groove (125), the heat transfer path originating from the welding region may be reduced.

FIG. 10 is a table measuring the substrate temperature during the welding process according to the presence or absence of the first groove and second groove in an embodiment of the present invention.

Referring to FIG. 10, Case 1 is when neither the first groove (125) nor the second groove (229) is formed on the first side plate (120) and the second side plate (220), respectively, Case 2 is where only the first groove (125) is formed on the first side plate (120), and Case 3 is where the first groove (125) is formed on the first side plate (120) and the second groove (229) is formed on the second side plate (220).

Accordingly, as shown in the table of FIG. 10, it can be observed that in Case 2, the temperature of the substrate (400) during the welding process is relatively lower compared to Case 1. Furthermore, in Case 3, it can be observed that the temperature of the substrate (400) during the welding process is lower compared to Case 2.

According to the exemplary embodiments, there is the advantage of being able to reduce the heat generated during the coupling process of the front body and rear body being transmitted to the substrate through the groove.

The foregoing description of the components constituting the exemplary embodiments of the present invention as being combined or operating in combination does not imply that the invention is necessarily limited to these embodiments. That is to say, within the scope of the objectives of the present invention, all components may be selectively combined and operated in one or more ways. Furthermore, terms such as "include", "comprise", or "have" as described above, unless specifically stated otherwise, imply that the component may be present. Therefore, they should be interpreted as meaning that the component may include other components, not that it excludes other components. All terms, including technical or scientific terms, unless otherwise defined, have the same meaning as generally understood by a person skilled in the art to which the invention pertains. Commonly used terms, such as those defined in dictionaries, should be interpreted in accordance with their meaning in the context of the relevant technology and, unless explicitly defined herein, should not be interpreted in an idealized or overly formalistic sense.

The foregoing description merely exemplifies the technical concept of the present invention. Those skilled in the art to which the present invention pertains will appreciate that various modifications and variations may be made without departing from the essential character of the invention. Therefore, the embodiments disclosed herein are intended to illustrate the technical concept of the invention, not to limit it, and the scope of the technical concept of the invention is not restricted by these embodiments. The scope of protection of the invention shall be interpreted by the appended claims, and all technical concepts within the scope equivalent thereto shall be interpreted as falling within the scope of the invention.

## Claims

1. A camera module comprising: a lens module; a front body that couples to the lens module and includes an upper plate and a first side plate extending downward from an edge of the upper plate; a rear body that is coupled to the front body and includes a lower plate facing the upper plate in an optical axis direction, and a second side plate extending upward from an edge of the lower plate; a substrate disposed in a space formed by coupling of the front body and the rear body; and a coupling part disposed between an outer surface of the rear body and an inner surface of the front body.

2. The camera module of claim 1, wherein an inner surface of the first side plate is disposed to wrap around an outer surface of the second side plate, and the coupling part is disposed between the inner surface of the first side plate and the outer surface of the second side plate.

3. The camera module of claim 1, wherein a lower surface of the first side plate and a lower surface of the lower plate form a common plane.

4. The camera module of claim 2, wherein a first gap is formed between the inner surface of the first side plate and the outer surface of the second side plate, wherein at least a portion thereof is spaced apart in a direction perpendicular to the optical axis direction.

5. The camera module of claim 3, wherein a first chamfered surface is formed in a corner region connecting the lower surface of the first side plate and the inner surface of the first side plate, a second chamfered surface is formed in a corner region connecting the lower surface of the rear body and the side surface of the rear body, and the coupling part is disposed between the first chamfered surface and the second chamfered surface.

6. The camera module of claim 1, wherein a first groove, which is more concave than other region, is formed on an outer surface of the first side plate, and at least a portion of the first groove overlaps with the substrate or the second side plate in a direction perpendicular to the optical axis direction.

7. The camera module of claim 1, wherein a second groove, which is more concave than other region, is formed on the outer surface of the second side plate, and the second groove is disposed on an upper side of the coupling part.

8. The camera module of claim 1, wherein a side of the substrate and the inner surface of the first side plate are spaced apart in a direction perpendicular to the optical axis direction.

9. The camera module of claim 1, wherein the front body protrudes downward from a lower surface of the upper plate and includes a first guide whose lower surface supports an upper surface of the substrate.

10. The camera module of claim 1, wherein the lower surface of the substrate contacts an upper surface of the second side plate.
